# EUROPEAN PATENT APPLICATION

(11) **EP 4 379 759 A1**
(43) Date of publication of application: **05.06.2024**
(21) Application number: 22210231.1
(22) Date of filing: 29.11.2022
(51) Int. Cl.: H01F 27/38, H01F 27/28, H01F 27/30, H01F 27/26, H01F 3/14, H02M 1/00, H02M 3/00, H02M 5/00, H02M 7/00

(54) **TRANSFORMER ASSEMBLY AND ELECTRIC CONVERSION DEVICE**

(71) Applicant: Delta Electronics (Thailand) Public Co., Ltd., Samutprakarn 10280 (TH)
(72) Inventor: NJIENDE, Hugues, 33102 Paderborn (DE); GRIEGER, Ralf, 59494 Soest (DE); HELDT, Dieter, 59494 Soest (DE)
(74) Representative: Hoefer & Partner Patentanwälte mbB

(57) **Abstract**

The present invention concerns a transformer assembly (1), especially for an electric conversion device (100), comprising at least one rake-shaped core member (2) respectively including a body portion (3), at least three winding legs (4), around each of which at least one electrical winding is wound, and at least two return legs (5), the at least three winding legs (4) and the at least two return legs (5) being connected magnetically to the body portion (3); wherein at least one electrical winding of at least one winding leg of at least one rake-shaped core member (2) is electrically connected in series with at least one electrical winding of at least one other winding leg (4) of said rake-shaped core member (2). The present invention also concerns an electric conversion device (100) comprising at least one transformer assembly (1).

## Description

The invention concerns a transformer assembly, especially for an electric conversion device, as well as an electric conversion device.

Commonly, in applications requiring multiple transformers, for instance in three-phase applications, each transformer comprised its own core. Further, when combined with chokes, for instance with two-phase PFC ("power factor correction") chokes, each choke also comprised its own magnetic core. Conventionally, some of the aforementioned transformer components or choke components have been integrated into single cores.

For instance, EP 3 401 935 discloses an integrated magnetic component for a power converter including a plurality of LLC converters configured for interleaved operation.

EP 3 045 593 discloses a magnetic integrated device and a power conversion circuit.

CN 1 05 895 302 discloses a multiphase magnetic integration coupling inductor.

US 10 395 819 discloses multiphase power converters having integrated magnetic cores for transformer and inductor windings.

EP 3 349 224 discloses an integrated magnetic component and switched mode power converter.

US 2020 / 0 286 670 discloses transformers having integrated magnetic structures for power converters.

In modern power supplies, paralleling or interleaving of converters is an often-used approach to increase efficiency. This however commonly results in a large quantity of magnetic components that in total are more voluminous.

The conventionally known converters have the disadvantage that the total volume of chokes and transformers and therefore the number of cores and coils is very high, which leads to a low power density. Furthermore, these commonly have a low number and/or surface area of cooling surfaces and are therefore prone to temperature increases and high hot-spot temperatures.

It is an object of the present invention to overcome the aforementioned challenges. In particular, it is an object of the present invention to provide a transformer assembly and an electric conversion device with high power density and which can be simultaneously efficiently cooled.

The solution of this object is achieved by the features of the independent claim. The dependent claims contain advantageous embodiments of the present invention.

The present invention concerns a transformer assembly. The transformer assembly is especially suited for use in an electric conversion device. The transformer assembly comprises at least one rake-shaped core member respectively including a body portion, at least three winding legs, and at least two return legs. Therein, at least one electrical winding is wound around each winding leg. The at least three winding legs and the at least two return legs are connected magnetically to the body portion. Furthermore, at least one electrical winding of at least one winding leg of at least one rake-shaped core member is electrically connected in series with at least one electrical winding of at least one other winding leg of said rake-shaped core member.

Thereby, especially via the at least two electrical windings being electrically connected to one another in series, it is possible to integrate multiple transformers and/or chokes of for example multi-phase configurations into for example single-phase configurations.

Herein and in the following, an electrical winding is defined as at least a portion of a conductor that is wound around a leg (thereby being a winding leg) of a core member. Furthermore, a transformer is preferably defined by two electrical windings, namely a primary winding and a secondary winding between which electrical energy is transferred via magnetic flux. In other words, the primary winding and the secondary winding of a transformer are not connected to one another electrically. Furthermore, preferably, a choke may comprise one or more choke windings between which no energy is transferred via magnetic flux. Instead, a choke winding provides an inductor with an impedance.

Preferably, at least one of the at least two electrical windings connected in series constitutes a primary winding of a transformer and/or a secondary winding of a transformer included in a transformer assembly and/or a choke winding of a choke included in the transformer assembly. In other words, the transformer assembly preferably comprises two primary windings connected in series and/or two secondary windings of a transformer connected in series and/or two choke windings connected in series and/or a combination of at least one primary winding and/or at least one secondary winding and/or at least one choke winding connected in series. Therein, primary windings are preferably not electrically connected, especially not in series nor in parallel, with secondary windings.

Preferably, at least one choke winding is connected with at least one primary winding. In addition or alternatively thereto, at least one choke winding is connected with at least one secondary winding.

Preferably, the transformer assembly comprises at least a first rake-shaped core member and a second rake-shaped core member. Therein, the electrical windings of at least one pair of winding legs, wherein each pair is defined as comprising one winding leg of the first rake-shaped core member and one winding leg of the second rake-shaped core member, together constitute at least one transformer and/or at least one choke.

Preferably, the at least one first rake-shaped core member and the at least one second rake-shaped core member are arranged with their respective winding legs being adjacent to the winding legs of the other rake-shaped core member. Advantageously, the first rake-shaped core member and the second rake-shaped core member are arranged such that their winding legs are arranged between the body portions of both first and second rake-shaped core members. Preferably, the return legs of the at least one first rake-shaped core member and of the at least one second rake-shaped core member are also arranged adjacent to one another. Preferably, the at least one first rake-shaped core member and the at least one second rake-shaped core member are arranged opposing one another, i.e. in a so-called "E∃" configuration. Therein, preferably, additional core members, especially rake-shaped core members are arranged between the first rake-shaped core member and the second rake-shaped core member and/or are arranged adjacent to either one or both of said first and second rake-shaped core members, especially adjacent to their body portions (for instance, "EE∃" or "E∃∃" or "EE∃∃", etc.). In the foregoing, the "E" is merely to refer to an orientation direction of the core member, and may preferably be applied to "W" (five legs instead of three legs) cores as for instance "WM" configuration, with the "legs" of the "M" being adjacent and opposing the "legs" of the "W", as with "E∃" configurations. Five-legged core members are commonly referred to as "W" cores.

In one advantageous embodiment, in the transformer assembly comprising the at least one winding leg pair constituting a transformer, each winding leg of said pair comprises at least one portion of a primary winding and at least one portion of a secondary winding of said transformer. Therein, preferably, each winding leg respectively only comprises one portion of each of the primary winding and the secondary winding. In other words, although each winding leg preferably comprises multiple portions of windings, for each thus formed transformer, each winding leg preferably only comprises one portion of the respective primary winding and one portion of the respective secondary winding. For instance, out of a pair of winding legs, one winding leg comprises two electrical winding portions, namely a portion of a primary winding and a portion of a secondary winding, wherein the other winding leg of said pair comprises another portion of the primary winding and of the secondary winding. In a further preferable example, the first winding leg of the pair of winding legs comprises four electrical winding portions, namely two primary winding portions and two secondary winding portions, wherein for instance the two primary winding portions are not primary winding portions of the same transformer (i.e. not connected electrically in series with one another). In other words, this aforementioned pair of winding legs constitutes two transformers each comprising one portion of a primary winding on one winding leg and the other portion of the primary winding on the other winding leg, wherein the same holds true for the secondary windings of each transformer. In yet other words, the electrical windings of the at least one transformer formed on each pair of winding legs are preferably split into portions between the separate winding legs of the each winding leg pair.

Preferably, none of the winding legs of the aforementioned winding legs pair comprise an entire primary winding and/or an entire secondary winding of the transformer of the winding leg pair.

Preferably, the portions of primary winding and/or the portions of secondary winding are, for each respective transformer thus formed, connected in series with one another. Therefore, preferably, for each transformer, a portion of primary winding on a first winding leg of a pair is connected in series with a portion of primary winding on a second winding leg of said pair, but preferably not connected in series with another portion of primary winding on said first winding leg of said pair. The same preferably holds true for the secondary winding portions.

Preferably, the at least one portion of the primary winding is wound around at least one portion of the secondary winding of said transformer and/or vice versa. In other words, alternatively, the at least one portion of the secondary winding is preferably wound around at least one portion of the primary winding of said transformer.

Preferably, all portions of the primary winding together are wound around all portions of the secondary winding of said transformer and/or vice versa.

Preferably, the portions of the primary winding and the portions of the secondary winding are in a bifilar arrangement. In addition or alternatively thereto, the portions of the primary winding and the portions of the secondary winding are in an interleaved arrangement.

Preferably, a winding axis of the portions of the primary winding is parallel to a winding axis of the portions of the secondary winding. Preferably, the winding axes are equal to one another. Preferably, the winding axes are equal to one another and equal to an extension direction of the winding leg(s) around which they are respectively wound.

Preferably, the portions of a primary winding of a pair of winding legs constituting a primary winding of one transformer together constitute a single continuous coil. In other words, preferably, a single continuous core is wound around and at least partially covers two winding legs. In addition or alternatively thereto, the same preferably holds true for a corresponding secondary winding. Therein, preferably, the primary winding thus formed at least partially surrounds the secondary winding, which at least partially surrounds the winding legs. In other words, along a direction perpendicular to the winding axis, the secondary winding is sandwiched between the winding legs and the primary winding.

Advantageously, the extension direction of the winding legs is perpendicular to an extension direction of the body portion. In the foregoing and in the following, the term "extension direction" preferably refers to a direction parallel to a greater dimension of the respective element. For instance, the body portion having a height and a length, the length being greater than the height, than the extension direction of the body portion is preferably defined as the length of the body portion. This also preferably holds true for the respective legs of the respective core member.

In one advantageous embodiment, at least one portion of the secondary winding of said pair surrounds a gap between the winding leg of the first rake-shaped core member and the winding leg of the second rake-shaped core member of said winding leg. In other words, a gap is preferably disposed between the winding leg of the first rake-shaped core member and the winding leg of the secondary rake-shaped core member of the same winding leg pair.

Preferably, the gap is an air-gap. In addition or alternatively thereto, the gap is preferably at least partially filled with a material. This material is preferably a magnetic material with low magnetic permeability such as powder core.

Preferably, at least one portion of the primary winding of said pair surrounds the aforementioned gap and/or a further gap between the winding leg of the first rake-shaped core member and the winding leg of the second rake-shaped core member of said winding leg.

Further preferably, a plurality of gaps are disposed between or within the respective winding legs of one or more winding leg pairs.

Preferably, at least one of the gaps is a distributed air gap. Preferably, any one or all legs, including winding legs and/or return legs, may be separated by a distributed air gap. Most preferably, especially winding legs comprising chokes are separated by distributed air gaps.

Preferably, the respective multiple portions of primary winding and/or secondary winding in each transformer are defined by a middle of the gap(s) along the extension direction. In other words, preferably, the middle of the gap(s) along the extension direction separates (not electrically) the portions of respective winding. For instance, a first portion extends to the middle of the gap, and a second portion extends in the same extension direction further form the middle of the gap. Therein, the first and second portions of one respective primary or secondary winding are electrically connected to one another.

Preferably, in the transformer assembly comprising the at least one winding leg pair constituting a transformer, one winding leg comprises a primary winding and the other winding leg comprises a secondary winding of said transformer.

Preferably, one winding leg comprises an entire primary winding and the other winding leg comprises an entire secondary winding of said transformer. Therein, preferably, the winding leg comprising the secondary winding of said transformer comprises no portions of the primary winding of said transformer, i.e. of said winding leg pair.

Preferably, one winding leg pair comprises the aforementioned configuration of winding portions, whereas one or more other winding leg pairs preferably comprises the aforementioned configuration of entire primary windings and/or secondary windings.

Preferably, each winding leg pair may comprise at least one transformer formed by the aforementioned portions of primary winding and/or portions of secondary winding as well as at least one transformer formed by the entire primary winding and/or entire secondary winding being wound around each leg of the same pair of winding legs.

Preferably, in an example of the transformer assembly comprising the at least one winding pair constituting a choke, one winding leg comprises a first choke winding and the other winding leg comprises a second choke winding, when the first and second choke windings are connected in series. Preferably, the first and second choke windings are connected in series with an interposed capacitor therebetween.

Preferably therein, when comprising the interposed capacitor, a distance, especially a wire length, from the first choke winding to the interposed capacitor is equal to a distance, especially a wire length, from the interposed capacitor to the second choke winding. In other words, preferably, the choke windings are disposed symmetrically with respect to the interposed capacitor.

Preferably, the transformer assembly comprises multiple winding leg pairs, especially three winding leg pairs, wherein each of the winding leg pairs preferably constitutes one or more transformers and/or one or more chokes. In one preferable example, a first winding leg pair constitutes a first transformer, a second winding leg pair constitutes one or more choke(s), and a third winding leg pair constitutes another transformer. Therein, preferably, the primary windings of the two aforementioned transformers are preferably connected in series with one another and with the choke, especially both the first and second choke windings of the choke.

Preferably, the secondary windings are not connected to one another, especially not in series. Preferably, each secondary winding is connected to an individual output of the transformer assembly. Alternatively, two or more secondary windings of the transformer assembly are preferably connected to one another, especially to one another and to a common output.

Preferably, at least one winding leg of one of the at least one rake-shaped core members comprises a primary winding and a secondary winding of a transformer. Therein, preferably, one winding leg comprises an entirety of one primary winding and an entirety of one secondary winding of a single transformer. The winding leg preferably comprises multiple transformers, i.e. multiple entire primary and secondary windings respectively of multiple transformers. For example, one winding leg preferably comprises two transformers and thus preferably comprises two primary windings and two secondary windings.

Preferably, each winding leg pair may comprise at least one transformer formed by the aforementioned portions of primary winding and/or portions of secondary winding on respective winding legs and/or at least one transformer formed by the entire primary winding and/or entire secondary winding being wound respectively around each leg of the same pair of winding legs and/or at least one transformer formed by the entire primary winding and the secondary winding being both wound around one leg of said pair of winding legs.

Preferably, at least one winding leg of one of the at least one rake-shaped core members comprises at least one choke winding, wherein the at least one choke winding is connected in series with at least one primary winding of a transformer.

Preferably, at least one winding leg of one of the at least one rake-shaped core members comprises at least one choke winding, wherein the at least one choke winding is connected, especially in series, with at least one secondary winding of a transformer.

In one advantageous embodiment, all electrical windings of one of the at least one rake-shaped core members constituting primary windings of a transformer are electrically connected in series. Thereby, preferably, multiple transformers of a multi-phase transformer configuration are integrated into a single-phase transformer configuration.

Advantageously, the electrical windings of winding legs adjacent to one another along a direction perpendicular to an extension direction of the winding legs comprise opposing winding directions. Preferably, winding directions of electrical windings are defined essentially in correspondence with a direction of magnetic flux induced by the respective electrical winding. Therefore, in other words, the electrical windings of adjacent winding legs are preferably wound such that their induced magnetic fluxes flow in opposing directions with respect to the extension direction.

Preferably, the magnetic flux induced by the electrical windings of one winding leg is preferably along the extension direction away from the body portion, whereas the magnetic flux induced by another electrical winding of another winding leg is preferably opposite to the extension direction towards the body portion.

Preferably, in one or more, especially each, rake-shaped core member of the transformer assembly, the winding legs and the return legs are connected at least magnetically to the body portion. Preferably, the winding legs and/or the return legs are also connected mechanically to the body portion. In one preferable embodiment, at least one, especially all, winding leg and/or at least one, especially all, return leg is formed integrally with the body portion. Preferably, such an integrated configuration of winding legs, return legs, and body portion is commonly referred to as "W" core shape, as explained above.

Preferably at least one of the winding legs and/or at least one of the return legs is connected only magnetically to the body portion. Preferably, at least one winding leg and/or at least one return leg is an element separate from the body portion. For example, at least one winding leg and/or at least one return leg may be separated from the body portion by a gap. For example, the body portion may be a "I" core connected magnetically to the aforementioned legs, thereby together constituting only magnetically a "W" core.

In one preferable embodiment, the transformer assembly comprises two rake-shaped cores, each being formed integrally with two return legs and three winding legs. In other words, the transformer assembly according to this preferable embodiment preferably comprises two "W" core members. Therein, preferably, the transformer assembly comprises three transformers, wherein the primary windings of the transformers are connected in series so as to constitute a single-phase transformer formed of an integration of three transformers. Therein, preferably, the two "W" cores oppose one another, such that their respective legs are adjacent and opposite one another.

Preferably, therein, the winding legs comprise portions of or entire primary and/or secondary windings of the transformers. For example, in the case of portions of the aforementioned windings, a first winding leg of the first rake-shaped core member comprises a portion of a primary winding and a portion of a secondary winding. The opposing and adjacent winding leg of the second rake-shaped core member comprises the other portion of the secondary and the other portion of the primary winding. Therein, the two secondary winding portions are interposed between the two primary winding portions, and preferably surround a gap between the two winding legs. The second portion of the primary winding is further connected in series to a second portion of a primary winding of a second transformer on a second winding leg of the second rake-shaped core member. This second portion of the second primary winding of the second transformer is connected in series with a first portion of a primary winding of that second transformer, with additionally two secondary winding portions interposed therebetween as in the case of the first winding leg. The first primary winding portion of the second transformer disposed on the first rake-shaped core member (second winding leg thereof) is connected in series with a second primary winding portion of a third transformer, which is in turn connected with a first primary winding portion of the third transformer on a third winding leg pair. Therein, preferably, the winding directions of the transformers 1 and 3 are the same, and opposite the winding direction of the second transformer, or middle transformer. Thereby, the magnetic flux direction alternate between the first and second and between the second and third transformers.

Preferably, in an alternative configuration of the aforementioned example, instead of the second or middle transformer, i.e. the second first and second portions of primary and secondary windings on the second winding leg pair, the transformer assembly preferably comprises choke windings. Therein, preferably, the second primary winding portion of the first winding leg pair is connected in series with a first choke winding wound around one winding leg of a second winding leg pair, and further connected in series with a second choke winding wound around a second winding leg of the same second winding leg pair. These choke windings are further connected in series with the transformer on the third winding leg pair. Preferably, a capacitor is connected in series between the two choke windings.

Preferably, the winding direction of both choke windings is opposite the winding directions of the transformers on the first winding leg pair and the third winding leg pair.

Preferably therein, the winding leg pair comprising the choke windings does not comprise any secondary windings.

In a further preferable embodiment, each winding leg of each rake-shaped core member comprises respectively one primary winding and one secondary winding, wherein the corresponding three primary windings are connected in series with one another within one rake-shaped core member. In addition or alternatively thereto, the primary windings, especially the three primary windings, of one rake-shaped core member may be connected in series with the primary windings, especially the three primary windings, of the second rake-shaped core member.

Preferably therein, each of the winding legs thus constitutes respectively one transformer comprising one primary winding and one secondary winding.

Preferably therein, an I-shaped core member is disposed between the two rake-shaped core members, which may also be referred to as "WIW" (or "WIM") configuration.

Preferably, an I-shaped core member is disposed at a winding leg side of at least one rake-shaped core and/or at a body portion side of at least one rake-shaped core, which may also be referred to as "WWI" or "IWW" (also "IWWI" being possible) configuration.

Preferably therein, the middle leg of one or both rake-shaped core members comprises respectively one or more choke windings, preferably two choke windings. Therein, the choke windings are respectively connected in series with a capacitor connected therebetween. preferably the choke windings are respectively connected in series with each other and respectively with one primary winding of one winding leg of the same rake-shaped core member. Thereby, each rake-shaped core member defines two transformers comprising a primary and a secondary winding and a choke. Therein, the primary windings of the two transformers are connected in series with one another and with the choke windings.

Preferably, in the configuration with the second winding leg comprising a primary and a secondary winding, the two rake-shaped core members of the transformer assembly define six transformers, wherein two pairs of three primary windings are connected in series. Further preferably, in the configuration with the choke windings on the second winding leg, the two rake-shaped core members of the transformer assembly define four transformers and two chokes. Preferably, in this configuration, the transformer assembly further comprises a plate-shaped core member, i.e. a "WWI", "WIM", or "WIW" configuration or the like.

In one preferable embodiment, the transformer assembly comprises two five-leg rake-shaped core members.

In a further preferable embodiment, transformer assembly comprises one rake-shaped core member and one I-shaped core member.

Preferably, the I-shaped core member is a plate core.

Preferably, the transformer assembly comprises two rake-shaped core members and one I-shaped core member. Preferably therein, the return and winding legs of a first rake-shaped core members are adjacent to the body portion of the second rake-shaped core member. Therein, the return and winding legs of the second rake-shaped core members are preferably adjacent to the I-shaped core member period.

Preferably, the transformer assembly comprises N+1 rake-shaped core members or N rake-shaped core members and one I-shaped core member. Preferably, N is a positive integer. In the case of the transformer assembly comprising one or more rake-shaped core members with choke windings, each rake-shaped core member preferably constitutes two transformers and one choke. In other words, such a transformer assembly comprises 2N transformers and at least N, preferably 2N, chokes. On the other hand, some rake-shaped core members of the transformer assembly may comprise choke windings, whereas others do not, but instead comprise only transformer windings. In the exemplary case of each rake-shaped core member comprising three transformers, the transformer assembly preferably comprises in total 3N transformers.

The present invention also concerns an electric conversion device. The electric conversion device comprises at least one transformer assembly according to any one of the above discussed preferable embodiments. Furthermore, the electric conversion device comprises at least one transformer switch unit and/or at least one converter unit. Preferably, the at least one converter unit is a power inverter, especially for converting direct current to alternating current, and inputting the alternating current into the transformer assembly. Further preferably, the transformer switch unit is configured to convert the alternating current output from the at least one transformer assembly into a direct current.

Preferably, the electric conversion device comprises at least one external choke, which is external from the transformer assembly. The external choke is preferably in a addition to or alternative to at least one of the aforementioned choke windings which are internal of the transformer assembly.

Preferably, the electric conversion device is a power supply unit.

Preferably, all outer legs of the transformer assembly are winding legs. Preferably, the return legs are interposed, along a direction perpendicular to the extension direction of the return and winding legs, between two winding legs. In other words, in the preferable case of five-legged rake-shaped cores, at least one or all rake-shaped cores respectively comprise, in order along the direction perpendicular to the extension direction, a first winding leg, a return leg, a second winding leg, another return leg, and a third winding leg. This has the advantage that winding legs, which generate the most heat in the transformer assembly as opposed to return legs, can be efficiently cooled.

Further, although in the foregoing "primary" and "secondary" are referred to, it goes without saying that these may be switched. For example, in case the conversion device is used in a battery charger or the like, during charging, the foregoing explained "primary" side may be used as input for energy, whereas during discharging, the foregoing explained "secondary" side may be used as input for energy, thereby essentially constituting a primary side. In other words, "primary" and "secondary" may be used interchangeably. Preferably, the foregoing embodiments are symmetrical, preferably bidirectional with respect to flow of electrical/magnetic energy.

Further details, advantages, and features of the preferred embodiments of the present invention are described in detail with reference to the figures. Therein:
Fig. 1 shows a circuit diagram of an electric conversion device with a transformer assembly according to a first embodiment;
Fig. 2 shows a schematic cross section of the electric conversion device with the transformer assembly according to the first embodiment;
Fig. 3 shows a circuit diagram of an electric conversion device with a transformer assembly according to a second embodiment;
Fig. 4 shows a schematic cross section of the electric conversion device with the transformer assembly according to the second embodiment;
Figs. 5 and 6 each show a schematic cross section of modifications of the electric conversion device with the transformer assembly according to the second embodiment;
Fig. 7 shows a circuit diagram of an electric conversion device with a transformer assembly according to a third embodiment;
Fig. 8 shows a schematic cross section of the electric conversion device with the transformer assembly according to the third embodiment;
Fig. 9 shows a perspective view of the transformer assembly according to the third embodiment;
Fig. 10 shows a circuit diagram of an electric conversion device with a transformer assembly according to a fourth embodiment;
Fig. 11 shows a schematic cross section of the electric conversion device with the transformer assembly according to the fourth embodiment;
Fig. 12 shows a perspective view of the transformer assembly according to the fourth embodiment;
Figs. 13-16show schematic cross sections of modifications of the transformer assembly according to any one of the foregoing embodiments.

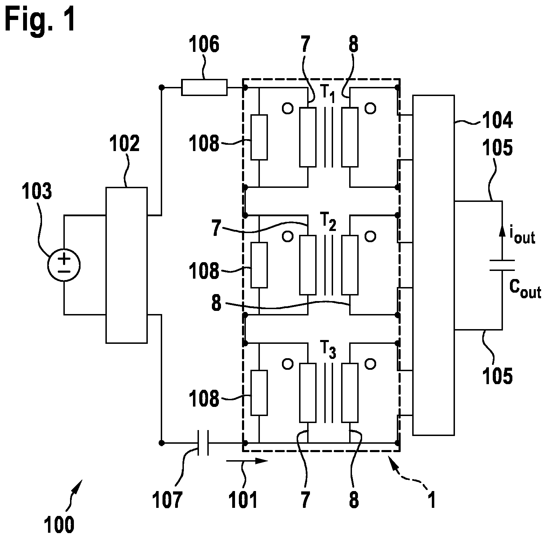

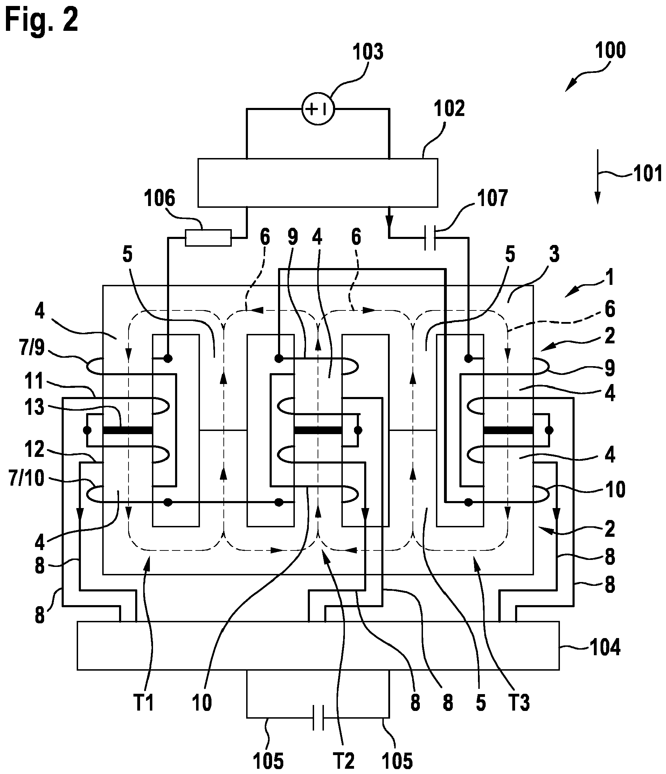

Fig. 1 shows a circuit diagram of an electric conversion device 100 with a transformer assembly 1 according to a first embodiment. Fig. 2 shows a schematic cross section of the electric conversion device 100 with the transformer assembly 1 according the first embodiment. The dotted line in Fig. 1 represents the transformer assembly 1 shown in further detail in Fig. 2.

As can be taken from Fig. 1, the transformer assembly 1 integrates three transformers T1, T2, T3 into a single magnetic core configuration. Herein, where conventionally three magnetic core configurations, one for each transformer T1, T2, T3, would be employed, the present embodiment integrates these into one single magnetic core configuration.

Furthermore, the electric conversion device 100 comprises a converter unit 102 connected to an input voltage 103. The transformer assembly 1 outputs, from secondary windings S1, S2, S3, a transformed signal to a transformer switch unit 104. The switch unit 104 includes outputs 105 for outputting a signal converted by the electric conversion device 100.

Furthermore, inductances 108 are connected to each transformer T1, T2, T3, in particular the primary windings 7 of each transformer T1, T2, T3. These inductances 108 may be elements such as coils which are separate from the windings 7, 8 of the transformers T1, T2, T3. Alternatively or in addition thereto, these inductances 108 may be formed by winding additional electrical windings around a magnetic member (discussed below in view of Fig. 2) around which the windings 7, 8 of the transformers T1, T2, T3 are wound. In other words, the inductances 108 are preferably integral with primary windings 7 and/or secondary windings 8 of one or more transformer T1, T2, T3.

Furthermore, as can be taken from Fig. 1, primary windings P1, P2, and P3 of the transformers T1, T2, and T3 are connected in series with one another, thereby constituting one single-phase transformer T1, T2, and T3. This will be discussed in more detail in view of Fig. 2.

As can be taken from Fig. 2, the transformer assembly 1 comprises two rake-shaped core members 2. Therein, each rake-shaped core member 2 comprises a body portion 3 and five legs 4, 5. Therein, legs 4 around which electrical windings are wound are defined as winding legs 4. Furthermore, legs 5 which close a magnetic circuit and which contain no electrical winding are defined as return legs 5.

As evident from Fig. 2, the winding legs 4 and the return legs 5 are connected magnetically to the body portion 3. In this embodiment, the winding legs 4 and the return legs 5 are formed integrally with the body portion 3. However, the winding legs 4 and the return legs 5 may be separated from the body portion 3 via a gap. In other words, the winding legs 4 and the return legs 5 are not necessarily formed integrally with the body portion 3. Instead, the configurations shown in the figures may also be achieved preferably via an arrangement of, for example, a plurality of "I" cores (for example, 6 "I" cores for each rake-shaped core member 2).

Furthermore, the two rake-shaped core members 2 are arranged in an opposing manner. In other words, the winding legs 4 of one rake-shaped core member 2 extend along an extension direction 101 from the body portion 3 so as to be adjacent (i.e. so as to end adjacent) and opposite to the winding legs 4 of the other rake-shaped core member 2. The same applies to the return legs 5 of the rake-shaped core members 2.

Furthermore, as discussed with regard to Fig. 1, the transformer assembly 1 of the present embodiment comprises three transformers T1, T2, T3. In the foregoing and in the following, "a transformer" is defined as a combination of primary windings with secondary windings (described in more detail in the following). Therefore, although as shown in Figs. 1 and 2 the primary windings are connected in series with one another so as to define a single-phase transformer, the transformer assembly 1 according to this definition comprises in the present embodiment three transformers, i.e. three combinations of a primary winding and a secondary winding.

With reference to Fig. 2, the winding configuration of the transformer assembly 1 of the present embodiment will now be described in more detail.

Each transformer T1, T2, T3 (compare Fig. 1) comprises a primary winding 7 and a secondary winding 8. Herein, each pair of winding legs 4 comprises the primary winding 7 and the secondary winding 8 of one transformer T1, T2, T3. As can be seen in Fig. 2, each primary winding 7 comprises a first primary winding portion 9 on the winding leg 4 of one rake-shaped core member 2 as well as a second primary winding portion 10 on the opposing winding leg of the other rake-shaped core member 2. In other words, in each pair of winding legs 4, one winding leg thereof comprises a first portion 9 of a primary winding 7, and the other winding leg 4 of said pair comprises a second portion 10 of the primary winding 7.

Furthermore, each winding leg 4 of said pair comprises a portion 11, 12 of the secondary winding 8. Herein, the portions 11, 12 of the secondary windings 8 are interposed between both portions 9, 10 of the primary winding 7 in each pair of winding legs 4 along the extension direction.

Herein, the portions 9, 10 of the primary winding 7 (shown in a simplified manner in Fig. 2 for ease of understanding) surround, especially completely, the portions 11, 12 of the secondary winding 8. In other words, the primary winding 7 is wound around the secondary winding 8. The first and second portions 9, 10, 11, 12 of the primary winding 7 and the secondary winding 8 are defined especially by an overlap of the respective winding with the underlying winding leg(s). For instance, the first portion 9 of the primary winding 7 is defined by an overlap of the primary winding 7 with the top winding leg 4 in Fig. 2. The same holds true for the further portions 10, 11, 12 of the primary and secondary windings 7, 8.

Therein, the primary winding 7 is wound around the secondary winding 8, whereas the secondary winding 8 is wound around the winding legs 4.

Furthermore, a gap 13 is provided between the winding legs 4 of said pair of winding legs 4, and said gap 13 is interposed by the portions 11, 12 of the secondary winding 8 as well as the portions 9, 10 of the primary winding 7. Essentially, a middle of the gap 13 in extension direction defines the first and second portions 9, 10, 11, 12 of the primary and secondary windings 7, 8.

In the present embodiment, no gap is provided between the pairs of return legs 5. Alternatively, gaps 13, especially distributed air gaps, may generally be provided between the return legs 5 and/or the winding legs 4.

Furthermore, as also demonstrated by lines of the magnetic circuit 6, a winding direction of the primary windings 7 and the secondary windings 8 differs between adjacent winding legs 4. In other words, the winding direction of the primary winding 7 and of the secondary winding 8 of the leftmost winding leg 4 is opposite that of the primary winding 7 and of the secondary winding 8 of the middle winding leg 4. Furthermore, the winding direction of the primary winding 7 and of the secondary winding 8 is opposite that of the middle winding leg 4 and the same as that of the left winding leg 4. Thereby, magnetic flux cancellation generated in the rake-shaped core members 2 leads to lower losses of the transformer assembly 1.

Although Fig. 2 shows a single winding for each winding portion 9, 10, 11, 12, the number of windings per electrical winding portion 9, 10, 11, or 12 can be correspondingly adapted to requirements, especially requirements on a flux density of the transformer assembly 1. Preferably, the first and second portions 9, 10 of the primary winding 7 and/or the first and second portions 11, 12 of the secondary winding 8 are continuous coils extending over the gap 13 and wound around one another.

Further, as can be taken from Fig. 1, the electric conversion device 100 comprises a choke 106 (inductor) and a blocking capacitor 107. Herein, the choke 106 and the blocking capacitor 107 are external to the transformer assembly 1. In other words, the choke 106 and the blocking capacitor 107 are not integrated within the transformer assembly 1.

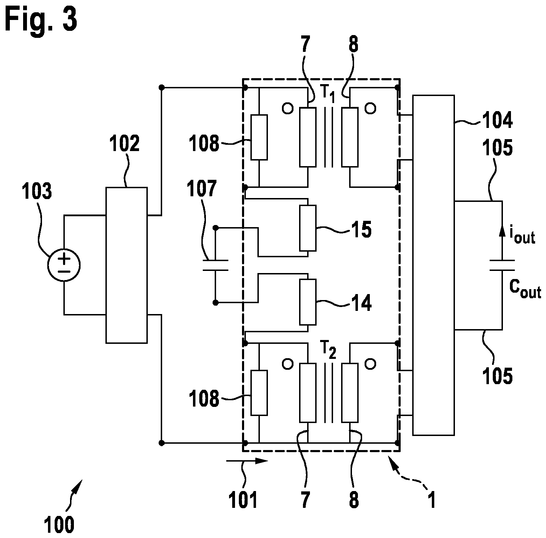

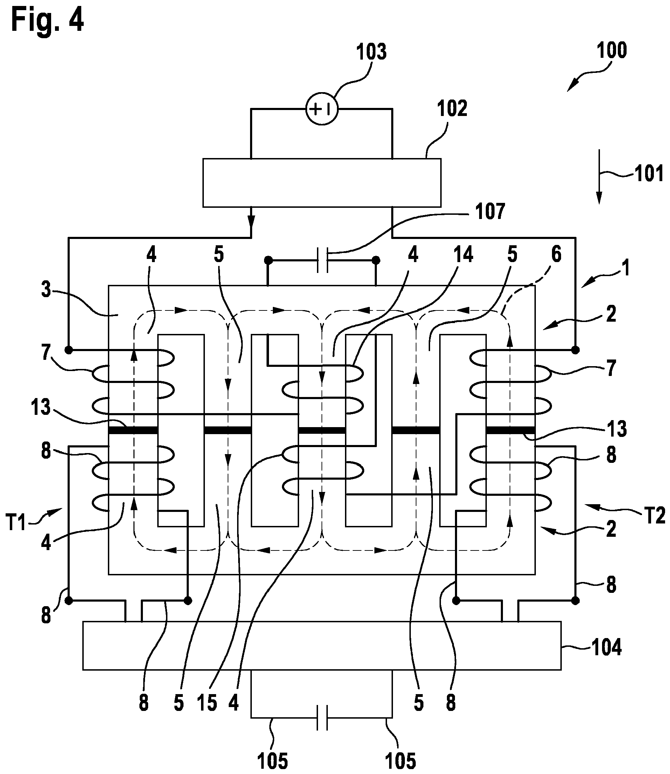

Fig. 3 shows a circuit diagram of an electric conversion device 100 with a transformer assembly 1 according to a second embodiment. Fig. 4 shows a schematic cross section of the electric conversion device 100 with the transformer assembly 1 according to the second embodiment. The dotted line in Fig. 3 represents the transformer assembly 1 shown in further detail in Fig. 4.

As a comparison of Fig. 3 with Fig. 1 shows, in the present embodiment, the choke 106 (see Fig. 1) is integrated within the transformer assembly 1, i.e. the magnetic core configuration. Herein, the transformer assembly 1 comprises a first choke 14 and a second choke 15. Furthermore, the blocking capacitor 107 is connected in series between the two chokes 14, 15. In addition, the two chokes 14, 15 are connected in series with the primary windings 7 of two transformers T1, T2. As an illustrative explanation, the two chokes 14, 15 in the present embodiment essentially replace the middle transformer of embodiment one shown in Fig. 2. This will be further explained in detail with respect to Fig. 4.

Herein, two transformers T1, T2 are formed respectively on pairs of winding legs 4 of the two rake-shaped core members 2. Therein, each winding leg 4 of said pair includes an entirety of the primary winding 7 or the secondary winding 8 of the respective transformers T1, T2. However, the configuration of portions of primary windings 9, 10 and/or of portions of secondary windings 11, 12 discussed with regard to Fig. 2 may be appropriately employed for one or both of the transformers T1, T2 of Fig. 4.

In the present embodiment, the primary winding 7 of the first transformer T1 is connected in series to the first choke 14, i.e. to a first choke winding 14 wound around a middle winding leg 4 of the top rake-shaped core member 2. Furthermore, a second choke 15, i.e. a second choke winding 15, is wound around a middle winding leg 4 of the second (bottom) rake-shaped core member 2. In other words, in a pair of winding legs 4, especially the middle pair of winding legs 4, the transformer assembly 1 comprises two choke windings 14, 15, one on each winding leg 4 of said pair of winding legs 4. This has the preferable advantage that the choke windings 14, 15 are disposed symmetrically within the transformer assembly 1. In addition or alternatively thereto, the transformer assembly 1 may comprise one or more winding legs 4 each having two choke windings 14, 15.

Preferably, a distance, especially a wire length, from the first choke winding 14 to the blocking capacitor 107 is equal to a distance, especially a wire length, from the blocking capacitor 107 to the second choke winding 15. In other words, the choke windings 14, 15 are preferably arranged symmetrically with respect to the blocking capacitor 107.

Further, the choke windings 14 are respectively connected in series with one another as well as with the blocking capacitor 107. In addition, the choke windings 14, 15 are connected in series with the primary windings 7 of the two outermost winding legs 4. Winding directions of the choke windings 14, 15, as illustrated by lines of the magnetic circuit 6, are opposite to the winding directions of the primary windings 7 of the transformers T1, T2.

Thereby, two transformers T1, T2 and two chokes 14, 15 are integrated into a single magnetic core configuration.

Furthermore, the present embodiment shows a preferably case in which all winding legs 4 and return legs 5 respectively include gaps 13 therebetween. Preferably, the gap 13 between the winding legs 4 comprising the choke windings 14, 15 is a distributed air gap.

The present embodiment of Fig. 4 may preferably be combined with the embodiment of Fig. 2. In particular, any one, multiple, or all windings including primary and/or secondary and/or choke windings 7, 8, 14 of Fig. 4 may preferably be arranged in a portioned manner (portions of windings), as demonstrated in Fig. 2. In addition or alternatively thereto, the portioned arrangement of any one, multiple, or all windings 7, 8, 14 of Fig. 2 may preferably be arranged in the full coil manner demonstrated in Fig. 4. In addition or alternatively, the windings may preferably be arranged in a bifilar arrangement and/or in an interleaved arrangement.

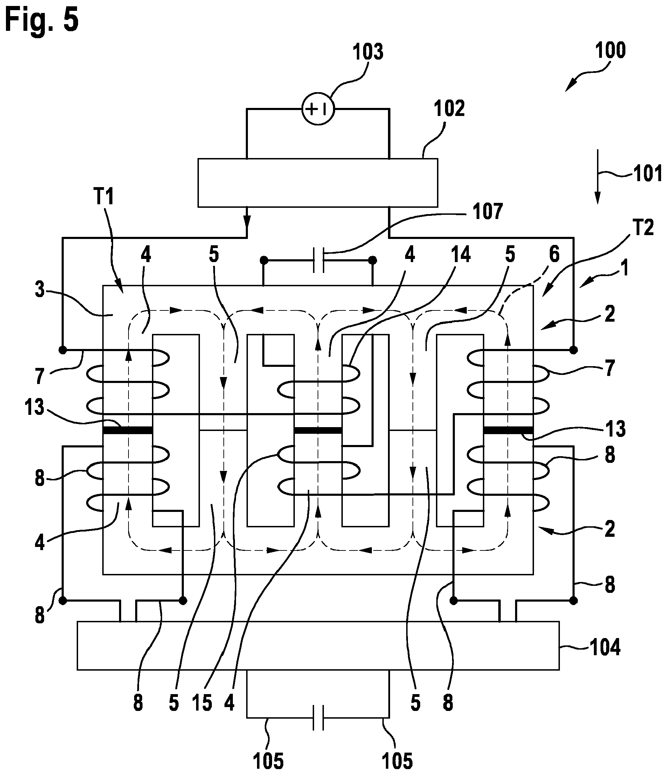

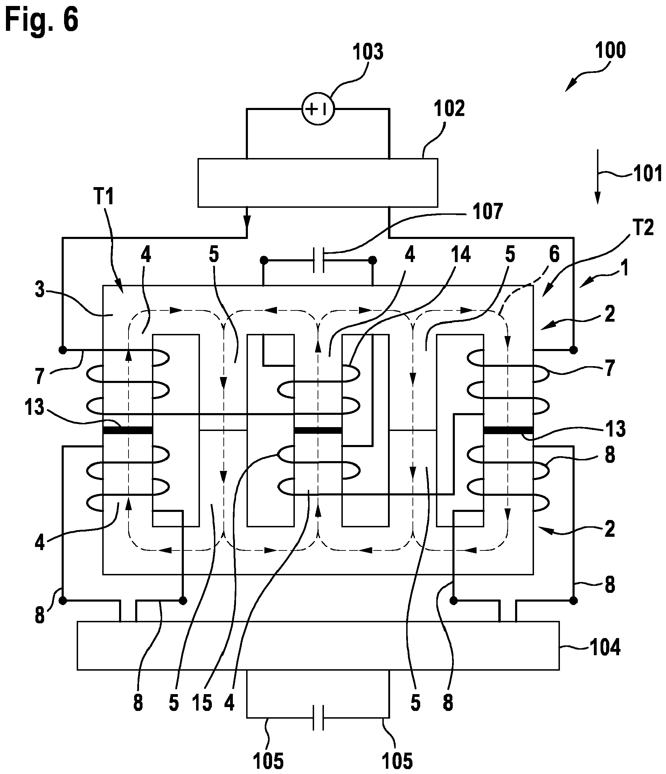

Figs. 5 and 6 each show a schematic cross section of modifications of the electric conversion device with the transformer assembly according to the second embodiment. In particular, each of Fig. 4, Fig. 5, and Fig. 6 show different winding direction configurations of the choke windings 14, 15.

Herein, as can be taken from the lines of the magnetic circuit 6, in Fig. 5, the winding direction of the choke windings 14, 15 is the same as that of the primary windings 7 of both of the transformers T1, T2., whereas in Fig. 4, the winding direction of the choke windings 14, 15 is opposite to the primary windings 7 of the two transformers T1, T2. Lastly, in Fig. 6, the winding direction of the choke windings 14, 15 is the same as that of Fig. 5. However, in the modification shown in Fig. 6, the primary winding 7 of transformer T2 is opposite that of the primary winding 7 of the transformer T1, or vice versa.

The foregoing modification of winding directions of the primary windings 7 and/or the choke windings 14, 15 may be suitably applied also to winding directions of the secondary windings 8 of one or more of the transformers T1, T2 and/or may additionally be applied to the primary winding portions 9, 10 and/or the secondary winding portions 11, 12 of any one or more of the transformers T1, T2, T3 of the first embodiment or the following further embodiments.

Furthermore, the choke windings 14, 15 do not necessarily need to be disposed on the middle winding legs 4 of the rake-shaped core members 2. Instead, a configuration in which the choke windings 14, 15 are disposed on any one of the outer winding legs 4 may be employed, wherein the transformers T1, T2 are disposed on the remaining winding legs 4 (for example on the middle winding leg 4 and the rightmost winding leg 4, wherein the choke windings 14, 15 are disposed on the leftmost winding leg 4).

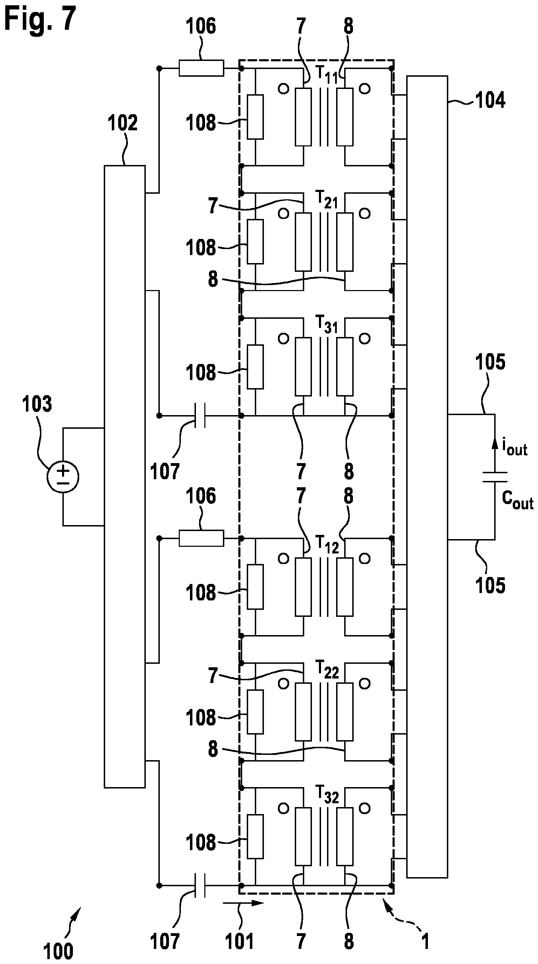

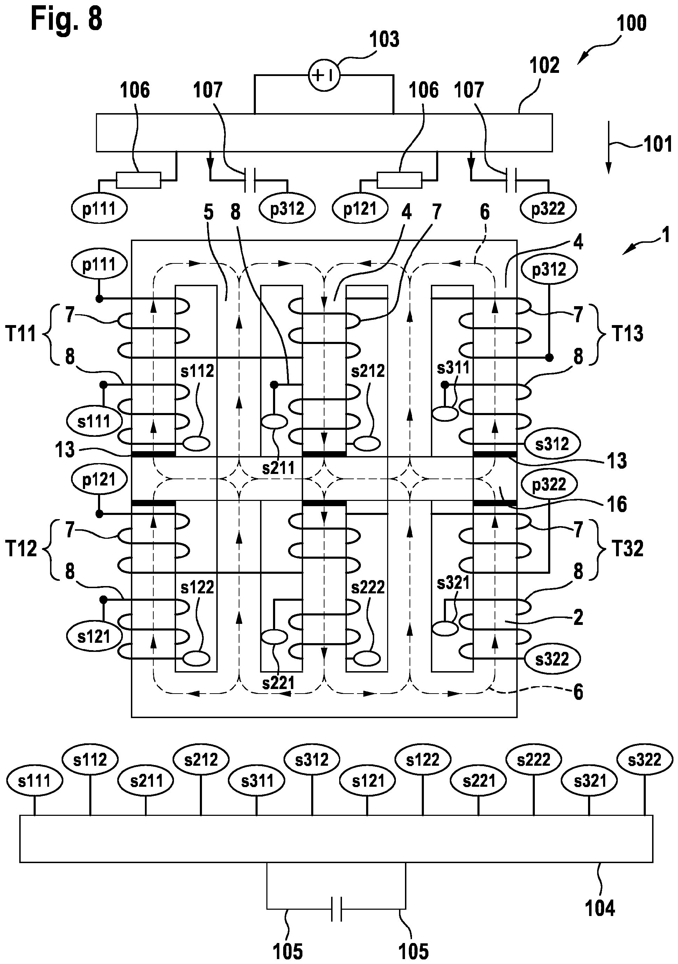

Fig. 7 shows a circuit diagram of an electric conversion device 100 with a transformer assembly 1 according to a third embodiment. Fig. 8 shows a schematic cross section of the electric conversion device 100 with the transformer assembly according to the third embodiment. The dotted line in Fig. 7 represents the transformer assembly 1 shown in further detail in Fig. 8.

As can be taken from Fig. 7, in the present embodiment, in total six transformers T11, T21, T31, T12, T22, T32 are integrated into a two-phase transformer configuration. In particular, the six transformers T11 to T32 are integrated in a single magnetic core configuration, as will be described in more detail with regard to Fig. 8. In addition, the electric conversion device 100 of the present embodiment comprises external chokes 106 as well as external blocking capacitors 107. Therein, each of the two sets of respectively three transformers T11 to T31 and T12 to T32 is connected in series with one external choke 106 and one blocking capacitor 107. Furthermore, the primary windings of the transformers T11 to T31 and T12 to T32 included in one phase are connected in series with one another.

As can be taken from Fig. 8, the transformer assembly 1 of the present embodiment comprises two rake-shaped core members 2 as well as one plate-shaped core member 16. The plate-shaped core member 16 is disposed between the legs 4, 5 of the rake-shaped core members 2. In other words, the plate-shaped core member 16 is interposed between the two rake-shaped core members 2, and is provided adjacent to ends of the legs 4, 5 of both rake-shaped core members 2.

Furthermore, in Fig. 8, circles including reference numerals denote connections, especially direct electrical connections, between the respective windings in order to simplify the diagram. For example, the two circles "p111" are to be understood as indicating a direct electrical connection to one another, the same holding true for all circles. These connections preferably comprise a direct wire connection or a connecting element (i.e. for example plug and socket).

Each of the rake-shaped core members 2 includes three primary windings 7 and three secondary windings 8. Thereby, each winding leg 4 of each rake-shaped core member 2 defines respectively one transformer T11 to T32. Furthermore, as can be taken from the lines of the magnetic circuit 6, the winding directions of the transformers on the middle winding legs 4 are opposite to the winding directions of the transformers on the outer winding legs 4.

The plate-shaped core member 16 closes the magnetic circuit 6 for all transformers T11 to T32.

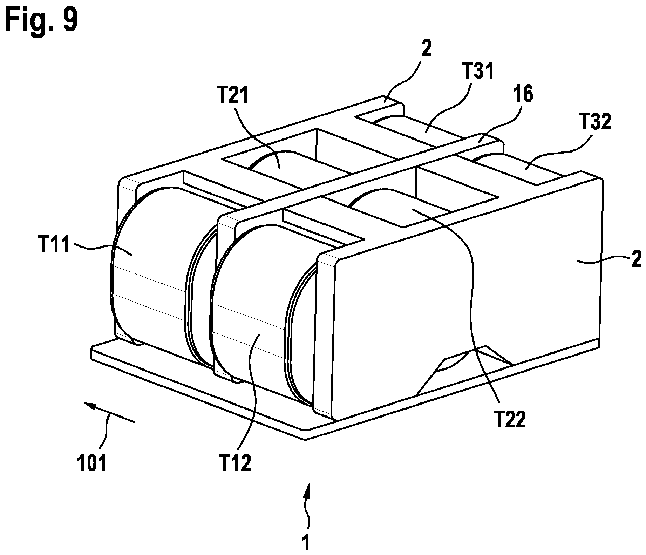

Fig. 9 shows a perspective view of the transformer assembly 1 according to the third embodiment. As can be taken therefrom, the transformer assembly 1 comprises the two rake-shaped core members 2 with an interposed plate-shaped core member 16. Further, the transformers T11 to T32 are disposed respectively between the rake-shaped core members 2 and the plate-shaped core members 16. As shown in Fig. 8, the winding directions of the primary and/or secondary windings 7, 8 of the transformers T11 to T32 are chosen so as to cancel fluxes in magnetic core segments common to multiple transformers, thereby reducing losses in the transformer assembly 1.

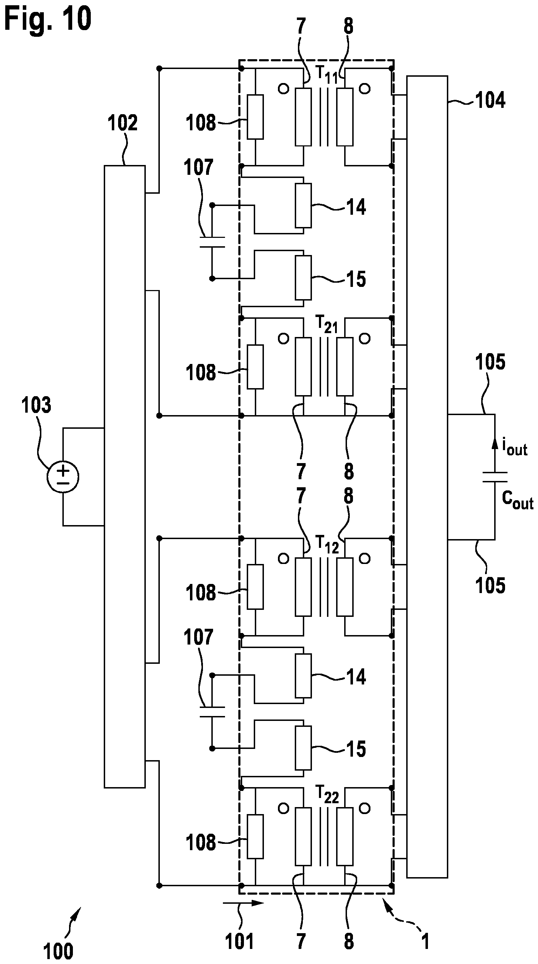

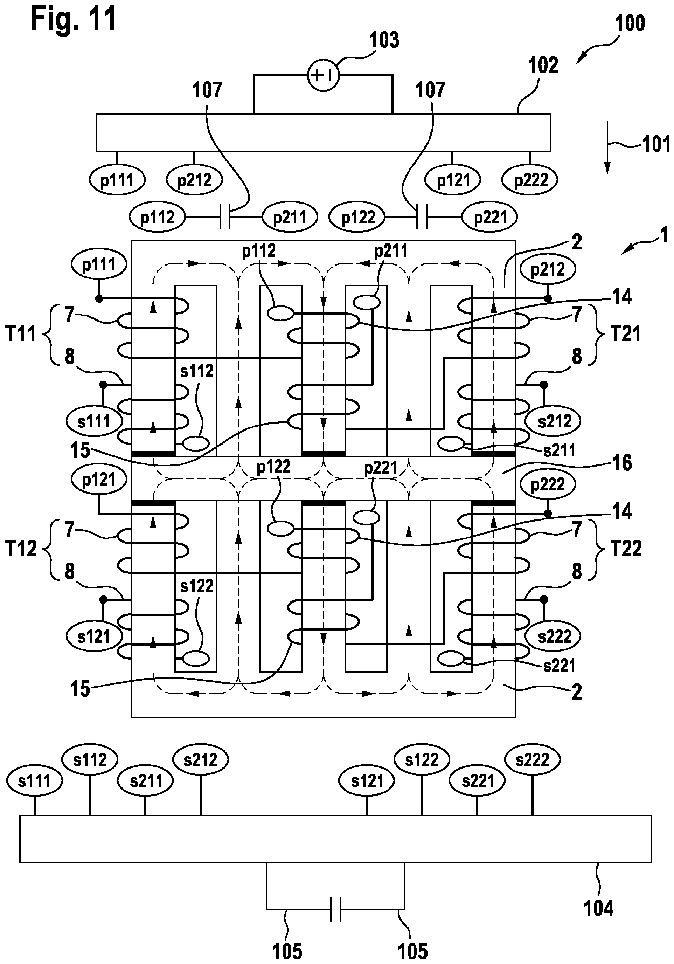

Fig. 10 shows a circuit diagram of an electric conversion device 100 with a transformer assembly according to a fourth embodiment. Fig. 11 shows a schematic cross section of the electric conversion device 100 with the transformer assembly according to the fourth embodiment. The dotted line in Fig. 10 represents the transformer assembly 1 shown in further detail in Fig. 11.

Essentially, the fourth embodiment is a combination of embodiments 2 and 3.

Herein, in addition or alternatively to the external chokes 106 shown in Fig. 7, the present embodiment comprises choke windings 14, 15 integrated within the transformer assembly 1, i.e. within the magnetic core configuration thereof.

Therein, each of the transformers T21 and T22 shown in Fig. 7 are replaced respectively with two choke windings 14, 15. In other words, as can be taken from Fig. 11, the middle winding legs 4 of each of the rake-shaped core members 2 comprises a first choke winding 14 and a second choke winding 15. The first choke winding 14 and the second choke winding 15 are both connected in series with the primary windings 7 of the transformers T11 and T21 or T12 and T22 of the respective (same) rake-shaped core member 2. In other words, the transformer assembly 1 of the present embodiment comprises two sets, each containing two transformers T11 and T21 or T12 and T22 as well as two choke windings 14, 15. In addition, the choke windings 14, 15 are connected in series with blocking capacitors 107.

Furthermore, the winding directions of the choke windings 14, 15 in the present embodiment are opposite those of the primary windings 7 and the secondary windings 8 of the transformers T11, T21, T12 and T22. In addition or alternatively thereto, the winding directions may be arranged as set forth in the other embodiments. In particular, the winding directions of the present embodiment may be arranged as set forth in Fig. 5 and/or Fig. 6.

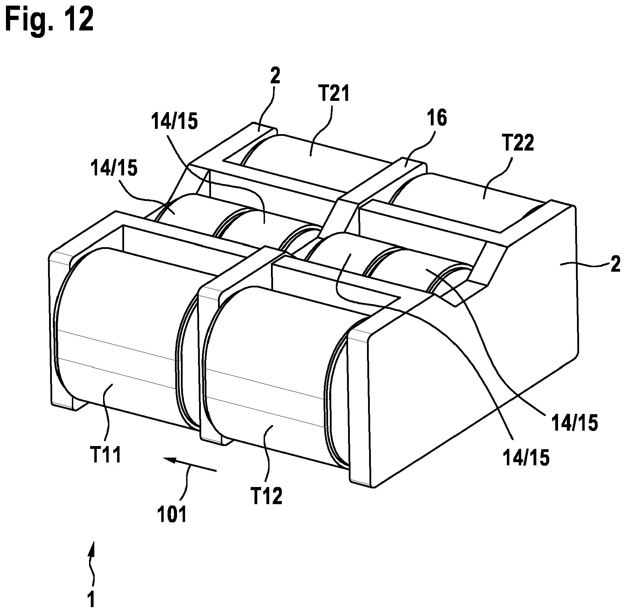

Fig. 12 shows a perspective view of the transformer assembly 1 according to the fourth embodiment. As can be taken therefrom, the transformer assembly 1 comprises the two rake-shaped core members 2 and the plate-shaped core member 16 in a "WIM" configuration. Therein, transformers T11, T21, T22 and T12 are disposed respectively between the rake-shaped core member 2 and the plate-shaped core member 16. In addition, the choke windings 14, 15 are interposed between the rake-shaped core member 2 and the plate-shaped core member 16 as well as interposed between two transformers (for example T11 and T21), respectively.

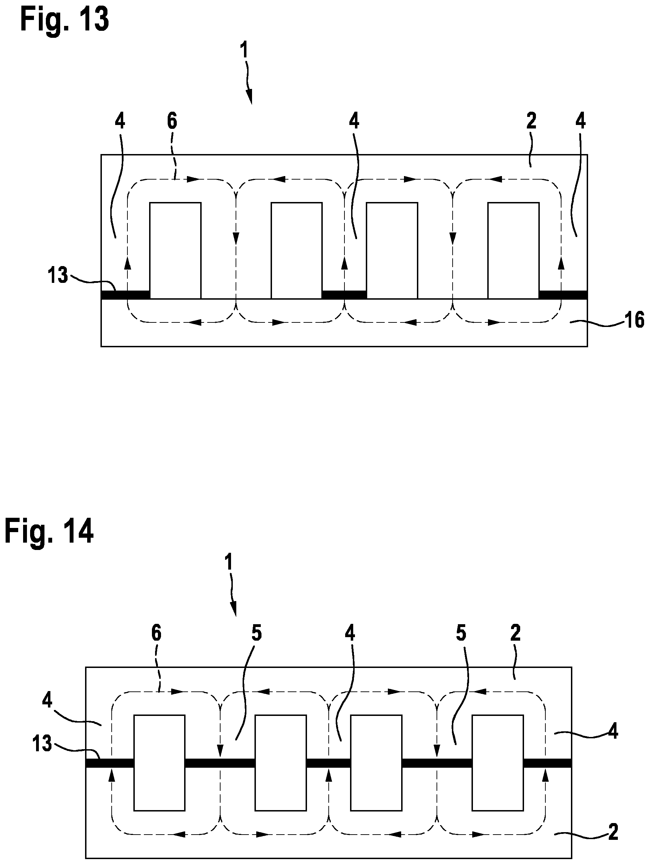

Figs. 13 to 16 show schematic cross sections of modifications of the transformer assembly 1 according to any one of the foregoing embodiments.

In particular, Figs. 13 and 14 describe modifications of the first and second embodiments described above.

As a comparison of Fig. 13 with Figs. 2 and 4 shows, the transformer assembly 1 according to embodiments 1 and 2 is not limited to comprising two rake-shaped core members 2. As also shown in Fig. 13, the transformer assemblies 1 of embodiments 1 and 2 may comprise one rake-shaped core member 2 and one plate-shaped core member 16. Especially in view of the combination of the modification of Fig. 13 with embodiment 1, the portions 9, 10 of primary windings and/or portions 11, 12 of secondary windings 8 can be suitably disposed on winding legs 4 of the rake-shaped core member 2 of Fig. 13 and/or on portions of the plate-shaped core member 16 shown in Fig. 13.

Furthermore, gaps 13 need not necessarily be provided between the winding legs and the plate-shaped core member 16. In addition or alternatively thereto, the plate-shaped core member 16 may also comprise gaps 13.

As can be taken from Fig.14, gaps 13 may be provided between all legs 4, 5 of the two rake-shaped core members 2. Further, widths of the legs are preferably not equal to one another. Preferably, widths of the return legs 5 are greater than widths of the winding legs 4. In particular, preferably, total cross-sections of all return legs 5 are equal to total cross-sections of all winding legs 4.

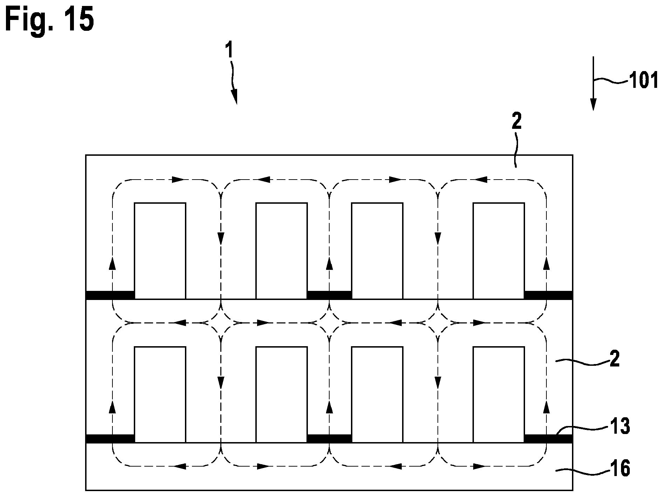

Further, Fig. 15 shows in particular a modification of the configuration of embodiments 3 and 4. Therein, as a comparison of Fig. 15 with Fig. 8 of embodiment 3 and Fig. 11 of embodiment 4 shows, the plate-shaped core member 16 need not necessarily be interposed between the two rake-shaped core members 2. Instead, the two rake-shaped core members 16 may be stacked on top of one another and both be stacked on top of the plate-shaped core member 16, as shown in Fig. 15. Such a configuration is also referred to as "WWI" configuration.

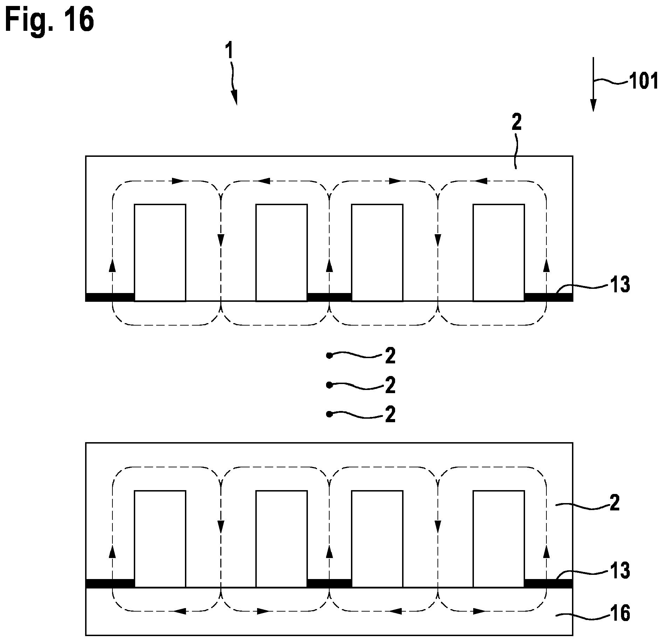

Furthermore, Fig. 16 shows a modification of the foregoing described embodiments. Therein, it is emphasized that the transformer assembly 1 described above may comprise any number of rake-shaped core members 2 and/or plate-shaped core members 16. In Fig. 16, an example is shown in which a high plurality of rake-shaped core members 2, denoted by the dots 2, are included. For instance, if the modification of Fig. 16 is combined with embodiment 3 shown in Fig. 8, a transformer assembly 1 comprising 3N transformers and N phases may be achieved, wherein N is the number of rake-shaped cores 2. In an exemplary combination of Fig. 16 with Fig. 11 of embodiment 4, a transformer assembly 1 may be achieved which includes 2N transformers and 2N choke windings or chokes, N being the number of rake-shaped cores 2.

As can be taken from the foregoing described embodiments, especially their figures, the transformer assemblies 1 described herein are preferably symmetrical with respect to input and output. Therefore, the terms "primary" and "secondary" are preferably interchangeable. In other words, the "secondary" side may also be used as an input, whereas the foregoing described "primary" side may be used as an input and vice versa.

In addition to the foregoing written explanations, it is explicitly referred to figures 1 to 16, wherein the figures in detail show circuit diagrams and configuration examples of the invention.

### Reference signs

- 1: transformer assembly
- 2: rake-shaped core member
- 3: body portion
- 4: winding leg
- 5: return leg
- 6: magnetic circuit
- 7: primary winding
- 8: secondary winding
- 9: primary winding portion
- 10: primary winding portion
- 11: secondary winding portion
- 12: secondary winding portion
- 13: gap
- 14: choke
- 15: choke
- 16: plate-shaped core member
- 100: electric conversion device
- 101: extension direction
- 102: converter unit
- 103: input voltage
- 104: transformer switch unit
- 105: outputs
- 106: choke
- 107: capacitor
- 108: inductance
- P1, P2, P3: primary windings
- S1, S2, S3: secondary windings
- T1, T2, T3: transformers
- T11, T21, T31, T12, T22, T32: transformers

## Claims

**1.** Transformer assembly (1), especially for an electric conversion device (100), comprising:
at least one rake-shaped core member (2) respectively including a body portion (3), at least three winding legs (4), around each of which at least one electrical winding is wound, and at least two return legs (5), the at least three winding legs (4) and the at least two return legs (5) being connected magnetically to the body portion (3); wherein
at least one electrical winding of at least one winding leg (4) of at least one rake-shaped core member (2) is electrically connected in series with at least one electrical winding of at least one other winding leg (4) of said rake-shaped core member (2).

**2.** Transformer assembly (1) according to claim 1, wherein at least one of the at least two electrical windings connected in series constitutes a primary winding (7) of a transformer (T1, T2, T3) and/or a secondary winding (8) of a transformer (T1, T2, T3) included in the transformer assembly (1) and/or a choke winding of a choke (14, 15) included in the transformer assembly (1).

**3.** Transformer assembly (1) according to any one of the foregoing claims, wherein the transformer assembly (1) comprises at least a first rake-shaped core member (2) and a second rake-shaped core member (2), wherein the electrical windings of at least one pair of winding legs (4), each pair comprising one winding leg (4) of the first rake-shaped core member (2) and one winding leg (4) of the second rake-shaped core member (2), together constitute at least one transformer (T1, T2, T3) and/or at least one choke (14, 15).

**4.** Transformer assembly (1) according to claim 3, comprising the at least one winding leg (4) pair constituting a transformer (T1, T2, T3), wherein each winding leg (4) of said pair comprises at least one portion (9, 10) of a primary winding (7) and at least one portion (11, 12) of a secondary winding (8) of said transformer.

**5.** Transformer assembly (1) according to claim 4, wherein the at least one portion (9, 10) of the primary winding (7) is wound around at least one portion (11, 12) of the secondary winding (8) of said transformer and/or vice versa and/or wherein the at least one portion (9,10) of the primary winding (7) and the at least one portion (11, 12) of the secondary winding (8) of said transformer are in a bifilar arrangement and/or in an interleaved arrangement.

**6.** Transformer assembly (1) according to claim 3, comprising the at least one winding leg pair constituting a transformer, wherein one winding leg (4) comprises a primary winding (7) and the other winding leg (4) comprises a secondary winding (8) of said transformer.

**7.** Transformer assembly (1) according to any one of claims 3 to 6, comprising the least one winding pair constituting a choke, wherein one winding leg (4) comprises a first choke (14) winding and the other winding leg (4) comprises a second choke (15) winding, wherein the first and second choke (14, 15) windings are connected in series, especially with an interposed capacitor (107) therebetween.

**8.** Transformer assembly (1) according to claim 7, comprising the interposed capacitor (107), wherein a distance, especially a wire length, from the first choke (14) winding to the interposed capacitor (107) is equal to a distance, especially a wire length, from the interposed capacitor (107) to the second choke (15) winding.

**9.** Transformer assembly (1) according to any one of the foregoing claims, wherein at least one winding leg (4) of one of the at least one rake-shaped core members (2) comprises a primary winding (7) and a secondary winding (8) of a transformer.

**11.** Transformer assembly (1) according to any one of the foregoing claims, wherein at least one winding leg (4) of one of the at least one rake-shaped core members (2) comprises at least one choke winding (14, 15), wherein the at least one choke winding (14, 15) is connected in series with at least one primary winding (7) of a transformer.

**12.** Transformer assembly (1) according to any one of claims 2 to 11, wherein all electrical windings of one of the at least one rake-shaped core members (2) constituting primary windings (7) of a transformer are electrically connected in series.

**13.** Transformer assembly according to any one of the foregoing claims, wherein the electrical windings of winding legs (4) adjacent, along a direction perpendicular to an extension direction (101) of the winding legs (4), to one another comprise opposing winding directions.

**14.** Electric conversion device (100), comprising at least one transformer assembly (1) according to any one of the foregoing claims and at least one transformer switch unit (104) and/or at least one converter unit (102).

**15.** Electric conversion device (100) according to claim 14, wherein the electric conversion device (100) comprises at least one external choke (106), which is external from the transformer assembly (1), and/or at least one internal choke (14, 15) winding according to claims 2, 3, 8 or 11.
